(19)

Europäisches
Patentamt
European
Patent Office
Office européen
des brevets

(11) **EP 4 502 735 A1**

(12) **EUROPEAN PATENT APPLICATION**

(43) Date of publication:
**05.02.2025   Bulletin 2025/06**

(21) Application number: **23200195.8**

(22) Date of filing: **27.09.2023**

(51) International Patent Classification (IPC):
**G05B 13/02** *(2006.01)*

(52) Cooperative Patent Classification (CPC):
**G05B 13/0265; G05B 13/021**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **04.08.2023   EP 23189843**

(71) Applicant: **Robert Bosch GmbH
70442 Stuttgart (DE)**

(72) Inventors:
• **Vinogradska, Julia
70839 Gerlingen (DE)**
• **Peters, Jan
64342 Seeheim-Jugenheim (OT Malchen) (DE)**
• **Berkenkamp, Felix
80335 Muenchen (DE)**
• **Bottero, Alessandro Giacomo
70193 Stuttgart (DE)**
• **Luis Goncalves, Carlos Enrique
70192 Stuttgart (DE)**

Remarks:
Amended claims in accordance with Rule 137(2)
EPC.

(54) **METHOD AND SYSTEM FOR CONSTRAINED CONTROLLING OF A COMPUTER-CONTROLLED SYSTEM BASED ON SAFE CONTROL INPUT**

(57)     The invention relates to a computer-implemented control method (700) of constrained controlling of a computer-controlled system. The system is controlled according to a control input, which is safe if a constraint quantity resulting from the controlling of the computer-controlled system exceeds a constraint threshold. A current control input is determined based on previous control inputs and corresponding previous noisy measurements. The computer-controlled system is controlled according to the current control input, thereby obtaining a current noisy measurement of the resulting constraint quantity. The current control input is determined based on a mutual information between a first random variable representing the constraint quantity resulting from the current control input and a second random variable indicating whether a further control input is safe and based on the Max-value entropy search (MES) acquisition function.

Fig. 4

EP 4 502 735 A1

**Description**

The invention concerns a method for safe Bayesian Optimization (BO) with Gaussian Processes (GP) with an information-theoretic safe exploration criterion that directly exploits the Gaussian Process posterior to identify the most informative safe parameters to evaluate, and a computer program and a machine-readable storage medium, and a system.

Prior art

In more and more technical fields, systems are being used that are controlled by a computer. For example, computer-controlled systems include robots and mechanical systems such as manufacturing systems. In recent years, such computer-controlled systems are increasingly being controlled using machine learnable models. Such models have the potential of providing better performance, and being better equipped to handle unexpected situations, than manually designed control techniques. In particular, a computer-controlled system may be trained according to a sequential decision-making process, which may comprise iteratively obtaining observation data representing the environment of the system and determining control data based on the observation data, thereby exploring the way in which the system interacts with the environment.

However, in practice, real-world environment interactions are typically subject to various constraints that should not be violated, neither in use nor during training. These can include safety constraints, e.g., ensuring that a robot does not crash into an object or person, but also performance constraints, e.g., ensuring that a manufacturing machine meets a minimum performance level while it is being fine-tuned by online training. Such a constraint may be phrased in terms of a constraint quantity, where the controlling is considered "safe" if the constraint quantity exceeds a constraint threshold.

Unfortunately, typically, it is a priori not known which control inputs lead to values of the constraint quantity that violate the constraint. Only by controlling the system, a noisy measurement of the safety quantity can be obtained. Accordingly, techniques are needed to control a computer-controlled system in order to learn information about the constraint quantity, without the constraint being violated and to learn simultaneously about the location of the optimum of the unknown objective function; in other words, using only control inputs that are likely to result in a constraint quantity exceeding the constraint threshold. Put another way, there is a need to learn about the safety of parameters by only evaluating parameters that are currently known to be safe. Since controlling the computer-controlled system costs time and money, it is also important for such exploration to be performed in a data-efficient way, in other words, to learn as much information about the safety of control inputs using as little interaction with the environment as possible.

In Y. Sui et al., "Safe exploration for optimization with Gaussian processes", proceedings ICML 2015, a method is provided called SafeOpt. SafeOpt optimizes an unknown function from noisy samples while requiring that the sampled function meets a safety threshold. To learn about the safety of the unknown function, SafeOpt defines a subset of the safe set comprised of points that are likely to expand the safe set if evaluated, and chooses the next point to evaluate among the defined subset as the one with the highest variance. The subset is defined according to a Lipschitz continuity assumption that can be tuned by setting the Lipschitz constant.

Known from EP 22184158.8 is an information-theoretic safe exploration criterion that directly exploits the GP posterior to identify the most informative safe parameters to evaluate.

Advantages of the invention

A safe BO algorithm needs both to explore-exploit within the current set of safe parameters and try to enlarge such set in order to find all safely reachable safe parameters. The proposed method consists in combining the safe set expansion with a new acquisition function. Concretely, given a safe set, new and safe parameters improved to find an optimum are found within this set that maximize the new acquisition.

One advantage of the proposed methods is given by the fact that it does not require an extra hyperparameter, e.g. as the Lipschitz constant in SafeOpt. Moreover, while SafeOpt -like algorithms require a discretized domain, the proposed method can be applied to both discrete and continuous domains, which also leads to improved sample efficiency and scalability.

Another advantage is its improved data-efficiency and scalability. This advantage owns to the fact that by the combined optimization of the proposed acquisition functions a better optimum compared to an independent optimization of both acquisition functions can be found.

Disclosure of the invention

Various measures discussed herein relate to the controlling of a computer-controlled system. The computer-controlled system may be controlled according to a control input, e.g., a vector of one or more continuous values. The control input can for example represent control data to be provided directly to an actuator, or can represent parameters for deriving respective control data to be provided to an actuator in respective iterations.

The controlling may be considered "safe" if a certain constraint quantity, resulting from the controlling of the computer-controlled system according to a control input, exceeds a constraint threshold. The constraint quantity may be a safety constraint, e.g., a constraint indicative of physical damage to the computer-controlled system itself or its environment due to the controlling. The constraint can also more generally indicate a desired minimum performance or another output-related function, for example, the constraint can represent a minimum quality of products output by a computer-controlled manufacturing machine. With such a type of constraint, safety exploration can be performed while ensuring that the controlling itself is useful, e.g., to perform online safe optimization; and/or while ensuring that a part of the state space is explored that is relevant to later real use.

The constraint quantity may be unknown a priori. In particular, an exact functional description of the constraint quantity given the control input may be unknown to the system that determines the control inputs. Instead, safety of control inputs may be explored by iteratively determining a current control input and controlling the computer-controlled system according to the current control input, resulting in a current noisy measurement of the resulting constraint quantity. Here, the noise can be due to measurement error and/or stochasticity of the computer-controlled system and/or the environment in which it operates.

Because of the lack of an exact functional description, the system that determines the control inputs, may not be able to guarantee with absolute certainty that a given control input is safe. However, based on previous control inputs and corresponding previous noisy measurements of the resulting constraint quantity, it may be possible to establish that a control input is safe with sufficient probability, e.g., exceeding a given threshold, for example according to a statistical model. The controlling of the computer-controlled system may be "constrained" in the sense that it is based on the expected safety of control inputs, and in particular, in the sense that control inputs are determined and used to control the computer-controlled system that are determined likely to be safe.

Interestingly, it is envisaged to determine the control input based on the information that it provides about other control inputs. In particular, the current control input may be determined based on a mutual information between two random variables. The first random variable may represent the constraint quantity resulting from the current control input. The second random variable may relate to a further control input, that is typically different from the control input itself. The second random variable may indicate whether this further control input is safe. Accordingly, the current control input may be determined such that it directly indicates an amount of information that is expected to be gained about the safety of other control inputs. According to the invention, the current control inputs are determined based on both the mutual information between the two random variables and based on a Max-value entropy search (MES) acquisition function.

In other words, a safe exploration is provided by learning about the optimum of an objective function via the MES and in order to perform safe BO, the safe exploration acquisition via the mutual information between the two random variables is paired to the MES. The mutual information may provide a measure of information gain about the safety of regions which, according to the current posterior, are neither likely safe nor unsafe. In particular, the current control input x may be selected from a safe set for which another point z, not necessarily in the safe set, exists such that the information gain about the safety at z by measuring at x is maximal, thereby effectively exploiting correlations between different regions of the domain. The MSE simultaneously incorporates the convergence towards the optimum.

The MES is well-known from the publication of Wang, Z. & Jegelka, S.. (2017). Max-value Entropy Search for Efficient Bayesian Optimization. Proceedings of the 34th International Conference on Machine Learning, Available from https://proceedings.mlr.press/v70/wang17e.html. MES is an acquisition function characterizing a gain in mutual information between the maximum y* and the next point that is queried, which can be approximated analytically by evaluating the entropy of the predictive distribution.

This is unlike approaches that use uncertainty about the current control input itself, which is only a proxy objective for the information about safety of parameters that safe exploration is intended to learn. More directly selecting the current control input based on the information that the safe exploration is intended to learn, may improve the data-efficiency of the safe exploration. The use of such mutual information-based control inputs is also referred to herein as Information-Theoretic Safe Exploration (ISE).

As mentioned, the further control input is typically different from the current control input, and in particular, the further control input can lie outside of a safe set of control inputs considered likely to be safe based on previous control inputs and corresponding noisy measurements. However, this is not needed, as will be discussed in more detail below. It is also noted that, apart from the mutual information, also other factors may be taken into account when determining the current control input, e.g., the current control input may be further based on a Bayesian optimization objective, as also discussed elsewhere.

By using the mutual information, a safe exploration technique is provided that directly exploits information gain about the safety of control inputs in order to expand the region of the parameter space that is known to be safe. By directly optimizing for safe information gain, data efficiency is improved, while also remedying various other disadvantages of existing techniques. There is no need to manually restrict the selection of control inputs to be on the boundary of the safe set, which is a heuristic that may miss control inputs from which more information can be learned. There is also a reduced need for hyperparameters, and in particular, there is no need for a hyperparameter representing the Lipschitz constant L corresponding to a L-Lipschitz continuity assumption that introduces an undesired trade-off between safety and performance. Moreover, the determination of the current control input and/or the selection of the further control input can be performed efficiently and accurately for continuous-valued control inputs without the need for discretization. The provided techniques also scale well to higher-dimensional control inputs, e.g., with control inputs with dimension at least 5 or at least 10. Finally, it can be guaranteed mathematically that the provided techniques learn about the safety of reachable control inputs to arbitrary precision.

Optionally, the mutual information may be defined according to a Gaussian Process model of the constraint quantity given the control input. This model may comprise modelling the noisy measurement of the constraint quantity as a noisy evaluation of an unknown function, and relating the current control input to previous control inputs according to a kernel function. Such a model may provide a suitable stochastic model of the expected value of the constraint quantity for the control input, based on which the mutual information may be defined. Optionally, the current control input and the further control input may be determined to maximize the mutual information. In other words, an optimization may be performed in which the current control input and at least one further control input are parameters. For example, a current control input may be selected that maximizes the maximum mutual information over one or more further control inputs. In the optimization, the current control input may be constrained to lie in a safe set of control inputs determined likely to be safe. By optimizing both for the current control input and the further control input(s), a current control input may be determined that is most informative about points other than the current control input itself.

The optimization typically results in a further control point that is different from the current control input and/or lies outside of a safe set of control inputs determined likely to be safe; but the optimization is typically not constrained to such further control points. As a consequence, it may not be excluded per se that the optimization returns e.g. a further control point within the safe set. However, typically, at least at some stage during the iterative controlling, a further control point outside of the safe set at that point is selected.

The optimization may be performed with respect to a single further control point, or in any case, a limited number of further control points, e.g., at most two or at most five. This is beneficial because it allows the current control point to be determined in a computationally efficient way (e.g., avoiding Monte Carlo averaging, and the like), and because it results in control procedure for which strong mathematical guarantees about exploration performance can be provided.

Optionally, the mutual information between the random variables may be maximized by a multi-start gradient descent. (Here, the term "gradient descent" includes both optimization by minimization and by maximization, the latter also sometimes being referred to as gradient ascent.) This is a good way to deal with the non-convexity of the optimization problem of maximizing the mutual information, in particular when restricting the current control input to lie in a safe set. However, other optimization techniques are also possible in principle. Optionally, the mutual information may be averaged over multiple further control inputs. In particular, the mutual information may be averaged over a continuous domain, in particular, over the set of possible control inputs. This allows to take into account the overall information gain of using the current control input, as opposed to the information gain for one or few further control inputs. For example, Monte Carlo averaging or other approximations may be used to deal with a continuous domain. Although this incurs additional computation complexity, the resulting control input can be more informative, which can be worthwhile especially if controlling the computer-controlled system is especially costly or time-consuming.

Optionally, the constraint quantity may represent a safety constraint, e.g., the constraint quantity may indicate a physical damage to the computer-controlled system and/or its environment. Instead of or in addition of indicating safety, the constraint quantity may indicate a minimal performance level, e.g., for use online optimization.

Optionally, the current control input may be determined such that the current control input lies in a safe set of control inputs determined likely to be safe. E.g., according to a statistical model of the constraint quantity, the control input may lead to a value of the constraint quantity that exceeds a constraint threshold with a given probability (which can be constant, but can also vary in time). The probability is application-dependent but can for example be at least 95%, at least 99%, or at least 99,9%. The safe set may be defined based on the previous control inputs and corresponding previous noisy measurements, e.g., based on a Gaussian Process model of the constraint quantity.

Optionally, the further control input may not lie in the safe set. As also discussed elsewhere, the current control input and the further control input are typically not determined in such a way that the further control input is guaranteed not to lie in the safe set. However, because further control inputs outside of the safe set typically have a higher uncertainty about their safety, typically, at some point, or even in a majority of cases during the optimization, further control inputs may be used that are outside of the safe set. In any case, it is noted that the safe set typically evolves due to additional measurements of the constraint quantity being made. For example, the further control input may lie outside of the safe set when the current control input is determined, but may later, e.g., as a consequence of the controlling according to the current control input, come to lie in a later safe set.

Optionally, the mutual information between the first and second random variables may be determined by approximating an entropy of the further control input being safe by a first-order Taylor expansion of a Gaussian distribution.

The second random variable may be based on an indicator function indicating whether or not the further control input is safe. The mutual information may be determined based on an entropy of this indicator function. Averaging this entropy over possible measurements of the constraint quantity for the control input may in general lead to an intractable integral for the mutual information. Interestingly, the inventors found that, by using a Taylor expansion for the entropy, an accurate closed-form approximation for the mutual information can be derived, allowing the mutual information to be efficiently and accurately be computed, especially when optimizing the current control input. Thereby a more accurate current control input can be determined.

Optionally, the control input may comprise one or more continuous-valued control parameters. Interestingly, where some existing approaches rely on discretization, the provided techniques work well with continuous-valued control parameters. In particular, efficient optimization techniques for continuous functions such as gradient descent can be used. The use of continuous-valued control parameters, in particular without a discretization, is particularly beneficial for higher-valued control inputs, e.g., comprising at least two, at least three, at least five, or at least ten continuous values. In particularly, the provided techniques can operate on any control signal expressible in terms of real scalar signals in a d-dimensional domain.

Optionally, the provided techniques for constrained controlling may be combined with the training of a control model for controlling the computer-controlled system. Such training may be performed by Bayesian optimization. Generally, in Bayesian optimization, an objective black box function may be optimized via sequential evaluations at points, in the present context: control inputs which do not violate an a priori unknown safety constraint. The Bayesian optimization may be performed simultaneously to the provided safe controlling, by determining a control input both based on the mutual information and based on the Bayesian optimization. It is also possible to perform the Bayesian optimization subsequently to the proposed constrained controlling in a multi-stage training, where, also during the Bayesian optimization, the safe set determined by the controlling may be taken into account and/or extended with additional measurements.

Generally, various types of Bayesian optimization can be used. The Bayesian optimization can be used to perform reinforcement learning, in other words policy search, wherein parameters are being learned that parameterize a policy for controlling the computer-controlled system. The Bayesian optimization can be based on an upper confidence bound acquisition function; for example, the current control input can be determined both based on the mutual information and on the acquisition function.

Optionally, the control model may be trained based on a model of the computer-controlled system as a Markov Decision Process (MDP). In particular, it is known per se learn about safety of parameters of a MDP using techniques similar to SafeOpt, as discussed e.g. in M. Turchetta et al., "Safe exploration for interactive machine learning", proceedings NeurIPS 2019 (incorporated herein by reference). Also in this Markov Decision Process context, constrained controlling by determining a current control input based on a mutual information as proposed herein, can be applied.

Generally, the proposed techniques can be used for a wide variety of computer-controlled systems. For example, the computer-controlled system can be a medical device. In this case, the constraint quantity may indicate an amount of pain and/or harm caused to a patient, for example. The computer-controlled system can also be a robotic system, a vehicle, a domestic appliance, a power tool, a manufacturing machine, a personal assistant or an access control system, for example.

As a concrete example, the computer-controlled system can be a drone. The drone may be controlled e.g. by linear control or by reinforcement learning. The constraint quantity may be based on distance to a target that is to be reached, and/or based on a safety constraint, e.g., a maximal speed or a minimal distance to other objects of the drone.

As another example, the computer-controlled system can be an industrial system such as a manufacturing machine. The industrial system may be optimized in terms of a performance measure, e.g., an efficiency. The optimization may be online optimization wherein the constraint quantity guarantees a minimal performance and/or safety.

As another example, the provided techniques can be used for hyperparameter optimization of a machine learnable model. The control inputs may represent hyperparameters of the machine learnable model. Controlling the system may comprise training the machine learnable model according to the hyperparameters, where the constraint quantity represents a measurement due to a controlling of the computer-controlled system as part of the training. Also in this case, the constraint quantity may for example indicate a minimal performance and/or a safety constraint.

These and other aspects of the invention will be apparent from and elucidated further with reference to the embodiments described by way of example in the following description and with reference to the accompanying drawings, in which:

Fig. 1 shows a control system for constrained controlling;

Fig. 2 shows a computer-controlled system;

Fig. 3 shows a (semi-)autonomous vehicle controlled by a computer;

Fig. 4 shows a detailed example of how to control a computer-controlled system in a constrained way;

Fig. 5 shows a computer-implemented control method;

Fig. 6 shows a computer-readable medium comprising data.

Description of the embodiments

We consider a sequential decision making task where the goal is to optimize an unknown function, while only being allowed to evaluate parameters that do not violate an a priori unknown (safety) constraint. A common approach is to place a Gaussian process prior on the unknown functions and allow evaluations only in regions that are safe with high probability. Most current methods rely on a discretization of the domain and cannot be directly extended to the continuous case. Moreover, the way in which they exploit regularity assumptions about the constraint introduces an additional critical hyperparameter. In the following, an information-theoretic safe exploration criterion is proposed that directly exploits the GP posterior to identify the most informative safe parameters to evaluate. The combination of this exploration criterion with a well known Bayesian optimization acquisition function yields a novel safe Bayesian optimization selection criterion. Said approach is naturally applicable to continuous domains and does not require additional hyperparameters.

We are given an unknown and expensive to evaluate function $f: X \rightarrow R$ which we aim to optimize by sequentially choosing and evaluating parameters $\{x_i\}$. However, we are not allowed to evaluate parameters that violate some notion of safety. Here we define the safety of parameters in terms of the function $f$ and of a known safety threshold $\tau(x)$, s.t. parameters that satisfy $f(x) \geq \tau(x)$ are classified as safe, while others are unsafe. Without loss of generality, in the following we set $\tau(x) = 0$. It is noted that the objective function to optimize and the safety constraint can be also different: Then, the definition of the safety of parameters can be given in terms of an a priori unknown safety constraint $s: X \rightarrow R$ and of a known safety threshold $\tau(x)$, s.t. parameters that satisfy $s(x) \geq \tau(x)$ are classified as safe, while others are unsafe.

To start exploring safely, we also have access to an initial safe parameter $x_0$ that satisfies the safety constraint, $f(x_0) \geq 0$. Starting from $x_0$, we sequentially select safe parameters $x_n \in X$ where to evaluate $f$, and at each iteration $n$ we obtain a noisy observation of $y_n := f(x_n) + v_n$ that can be corrupted by additive homoscedastic Gaussian noise

$$v_n \sim \mathcal{N}(0, \sigma_v^2)$$

. The goal is to to find the safe optimum, namely the parameter, among those that are safely reachable from $x_0$, that yields the biggest value of $f$.

A Gaussian process (GP) is a stochastic process specified by a mean function $\mu: X \rightarrow R$ and a kernel $k$. It defines a probability distribution over real-valued functions on $X$, such that any finite collection of function values at parameters $[x_1,..., x_n,]$ is distributed as a multivariate normal distribution.

The GP prior can then be conditioned on (noisy) function evaluations $D_n = [x_i, x_i]_{i=1}^{n}$.

Using the previous assumptions, we can construct high-probability confidence intervals on the function values $f(\textbf{x})$. Concretely, for any $\delta > 0$ it is possible to find a sequence of positive numbers $\{\beta_n\}$ such that $f(\textbf{x}) \in [\mu_n(\textbf{x}) \pm \beta_n \sigma_n(\textbf{x})]$ with probability at least $1 - \delta$, jointly for all $x \in X$ and $n \geq 1$. We use these confidence intervals to define a safe set:

$$S_n := \{x \in X: \mu_n(x) - \beta_n \sigma_n(x) \geq 0\} \cup S_{n-1}; S_0 = x_0$$

which contains all parameters whose $\beta_n$-lower confidence bound is above the safety threshold, together with all parameters that were in past safe sets. Consequently, we know that all parameters in $S_n$ are safe, $f(x) \geq 0$ for all $x \in S_n$, with probability at least $1 - \delta$ jointly over all iterations $n$.

At the beginning of this section, we stated that the goal of a safe optimization algorithm is to find the optimum within the largest safe region containing the safe seed $x_0$. In this subsection we formally define such notion of largest reachable safe set. As we rely solely on the GP posterior to generalize and define the safe set, a natural choice for the largest safe region containing the safe seed is the set that is safely reachable by any well behaved GPs.

In the last section, we defined the goal of a safe optimization algorithm, namely finding the safe optimum $f^*$. In order to accomplish this task, we adopt a typical Bayesian optimization (BO) approach, where we sequentially evaluate parameters that maximize a so called acquisition function $\alpha: X \rightarrow R$ defined via the GP posterior, until we can confidently identify the optimum, or until we have expended the evaluations budget. A key element to keep in mind when designing a BO acquisition function is the exploration-exploitation trade-off, as the optimum could be both in regions we know more about and seem promising, as well as in areas where our uncertainty is high. In safe BO, the fact that we only allowed to evaluate parameters that are safe with high probability adds a further layer of complexity to the exploration-exploitation problem, for applying exploration strategies of popular BO algorithms within the set of safe parameters can be insufficient to drive the expansion of the safe set and learn about the safe optimum.

One objective of the safe BO algorithm of the present invention is to simultaneously learn about the safety of parameters outside the current safe sets, promoting its expansion, and explore-exploit within the safe set to learn about the safe optimum.

In order to achieve this behavior, we propose an acquisition function that selects the parameters to evaluate as the ones that maximize the information gain about the safety of parameters outside of the safe set and about the value of the optimum within the safe set.

To be able to expand the safe set beyond its current extension, we need to learn what parameters outside of the safe set are also safe with high probability. Most existing safe exploration methods rely on uncertainty sampling over subsets of $S_n$. SafeOpt-like approaches, for example, use the Lipschitz continuity assumption on $f$ to identify parameters in $S_n$ that could expand the safe set and then select the parameter that has the biggest uncertainty among those.

The safe exploration strategy that we propose instead uses an information gain measure to identify the parameters that allow us to efficiently learn about the safety of parameters outside of $S_n$. In other words, we want to evaluate $f$ at safe parameters that are maximally informative about the safety of other parameters, in particular of those where we are uncertain about whether they are safe or not.

To this end, we define the Information-Theoretic Safe Exploration (ISE) acquisition known from the above recited publication EP 22184158.8:

$$\alpha^{ISE} := \max_{\mathbf{z} \in \mathcal{X}} I_n\big(\mathbf{x}, y; \Psi(\mathbf{z})\big),$$

Evaluating $f$ at $argmax_{x \in S_n} \alpha^{ISE}$ $(x)$ maximizes the information gained about the safety of some parameter $z \in X$, so that it allows us to efficiently learn about parameters that are not yet known to be safe. While z can lie in the whole domain, the parameters where we are the most uncertain about the safety constraint lie outside the safe set. By leaving z unconstrained, once we have learned about the safety of parameters outside the safe set, $\alpha^{ISE}$ resorts to learning about the constraint function also inside $S_n$.

Next, we address exploration and exploitation within the safe set, in order to learn about the current safe optimum.

In the previous subsection we discussed an exploration strategy that promotes the expansion of the safe set beyond the parameters that are currently classified as safe with high probability. As discussed, such an exploration component is essential for the task at hand, especially in those circumstances where the location of the safe optimum is far away from the safe seed $x_0$. In order to find the safe optimum $f^*$, however, it is obviously not enough to learn about the largest reachable safe set, but one also needs to learn about the function values within the safe set, until the optimum can be identified with high confidence.

To this end, a it is proposed to pair the mutual information with an information measure about the location of the optimum within the current safe set and then evaluating the parameter $x_{n+1}$ that achieves the maximum between the two information gain measures:

$$x_{n+1} \in argmax_{x \in S_n} \quad \max\{\alpha^{ISE}(x), \alpha^{MES}(x)\}$$

where $\alpha^{MES} := I_n\{x, y; f^*_{S_n}\}$, and where MES is proposed by the authors Zi Wang and Stefanie Jegelka in their publication "Max-value entropy search for efficient Bayesian optimization".

By selecting $x_{n+1}$, we choose the parameter that yields the highest information gain about the two objectives we are interested in: what parameters outside the current safe set are also safe and what is the optimum value within the current safe set.

A pseudo code can be given as follows:

> **Input:** GP prior $(\mu_0, k, \sigma_v)$, Safe seed $\mathbf{x}_0$
>
> **for** $n = 0, ...$ **do**
>
> $\quad x_{n+1} \leftarrow arg\ max_{\mathbf{x} \in S_n}\ max\{\alpha^{ISE}(x), \alpha^{MES}(x)\}$
>
> $\quad y_{n+1} \leftarrow f(\mathbf{x}_{n+1}) + v$
>
> $\quad$ Update GP posterior with $(\mathbf{x}_{n+1}, y_{n+1})$

It is noteworthy, that the acquisition function $\alpha^{ISE}(x)$ acts as a safe exploration component, since it vanishes within the safe set, where we have high confidence about the safety of $f$, while it achieves its biggest values on the boundary of the safe set, where an observation is most likely to give us valuable information about the safety of parameters about whose safety we don't know much yet. On the contrary, the optimization component of the acquisition function, $\alpha^{MES}(x)$, has its optimum in the inside of $S_n$, where the current safe optimum of $f$ is likely to be, so that an observation there would increase the amount of information we have about the safe optimum value $f^*$ within the current $S_n$.

The reason why the single components alone would ultimately lead to an inefficient safe optimization behaviour: the exploration part would keep sampling close to the border of $S_n$, until the safe set cannot be expanded further, and then it would try to reduce the uncertainty on the border to very low values, before turning its attention to the inside of the safe set. On the other hand, the exploration-exploitation component within $S_n$ can drive the expansion of the safe set only until it is still plausible that the optimum is in the vicinity of the boundary of $S_n$, so that an observation in that area can give us information about the optimum value. As soon as that is not the case anymore, this component of the acquisition function would keep focusing on the inside of $S_n$ for a large number of iterations, effectively stopping the expansion of the safe set, even in the case that the current safe set is not yet the biggest possible one and it may not yet contain the true safe optimum $f^*$.

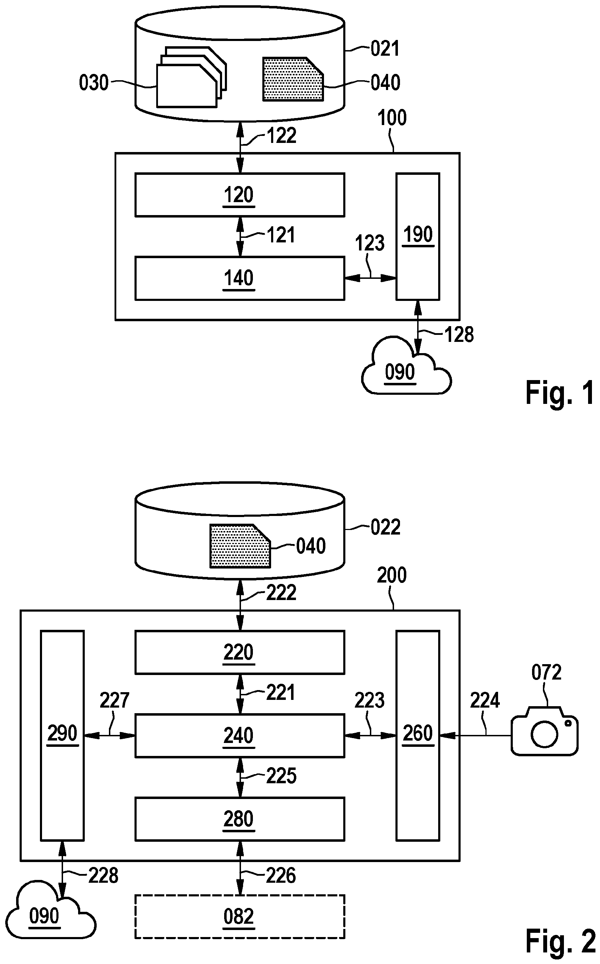

Fig. 1 shows a control system 100 for constrained controlling of a computer-controlled system, e.g., computer-controlled system 200 of Fig. 2. The computer-controlled system may be controlled according to a control input 128. The control input may be safe if a constraint quantity resulting from the controlling of the computer-controlled system exceeds a constraint threshold.

The system 100 may comprise a data interface for accessing data 030 representing previous control inputs and corresponding previous noisy measurements of the resulting constraint quantity. Optionally, the data interface may be for accessing a control model 040 being trained by system 100. The control inputs and measurements 030, data representing a safe set of control inputs for the computer-controlled system that is based on the control inputs and measurements 030, and/or the control model 040 may be used to control the computer-controlled system, for example by control system 100 or computer-controlled system 200 itself. Control system 100 may be combined in a single system with the computer-controlled system, e.g., system 200 of Fig. 2.

For example, as also illustrated in Fig. 1, the data interface may be constituted by a data storage interface 120 which may access the data 030, 040 from a data storage 021. For example, the data storage interface 120 may be a memory interface or a persistent storage interface, e.g., a hard disk or an SSD interface, but also a personal, local or wide area network interface such as a Bluetooth, Zigbee or Wi-Fi interface or an ethernet or fibreoptic interface. The data storage 021 may be an internal data storage of the system 100, such as a hard drive or SSD, but also an external data storage, e.g., a network-accessible data storage. In some embodiments, the data 030, 040 may each be accessed from a different data storage, e.g., via a different subsystem of the data storage interface 120. Each subsystem may be of a type as is described above for data storage interface 120.

The system 100 may further comprise a processor subsystem 140 which may be configured to, during operation of the system 100, determine a current control input 128 based on the previous control inputs and the corresponding previous noisy measurements 030. The current control input may be determined using a signal based on a mutual information between a first random variable representing the constraint quantity resulting from the current control input and a second random variable indicating whether a further control input is safe. The current control input may be based on further signals, e.g., a signal for training a control model and/or for online optimization of the computer-controlled system. The processor subsystem 140 may be further configured to control the computer-controlled system according to the current control input, thereby obtaining a current noisy measurement of the resulting constraint quantity.

Generally, the controlling of the computer-controlled system may be performed in various ways. In particular, the system 100 may comprise a communication interface 190 configured for communication 128 with the computer-controlled system. Control system 100 may provide the current control input to the computer-controlled system via the communication interface. Alternatively, control system 100 may derive one or more respective control signals based on the current control input, e.g., based further on respective sensor measurements of the computer-controlled system, and communicate the control signals, and optionally also the sensor measurements, via interface 190. Control system 100 may obtain the current noisy measurement of the constraint quantity via communication interface 190, e.g., from the computer-controlled system, but system 100 can also perform the measurement itself, e.g., via a sensor interface as discussed with respect to Fig. 2. As discussed above, system 100 can also be combined with system 200. Accordingly, in general, system 100 may comprise an output interface for outputting the current control input, and/or control signals derived from the current control input, which can for example be communication interface 190 or an actuator interface as in Fig 2.

Communication interface 190 may internally communicate with processor subsystem 140 via data communication 123. Communication interface 190 may be arranged for direct communication with the computer-controlled system, e.g., using USB, IEEE 1394, or similar interfaces. As illustrated, communication interface 190 may communicate over a computer network, for example, a wireless personal area network, an internet, an intranet, a LAN, a WLAN, etc. For instance, communication interface 190 may comprise a connector, e.g., a wireless connector, an Ethernet connector, a Wi-Fi, 4G or 4G antenna, a ZigBee chip, etc., as appropriate for the computer network. Communication interface 190 may also be an internal communication interface, e.g., a bus, an API, a storage interface, etc.

The system 100 may further comprise an output interface (not shown) for outputting output data based on the collected control inputs and noisy measurements 030, and/or for outputting the trained control model 040. For example, the collected inputs and measurements itself may be output, or data representing a safe set derived from the inputs and measurements. For example, the output interface may be constituted by the data interface 120, with said interface being in these embodiments an input/output ('IO') interface, via which the output data may be stored in the data storage 021. In some embodiments, the output interface may be separate from the data storage interface 120, but may in general be of a type as described above for the data storage interface 120. As another example, the output interface may be constituted by the communication interface 190, e.g., with the output data being output to the computer-controlled system that is being controlled, or to another system.

Fig. 2 shows a computer-controlled system 200. The computer-controlled system 200 may be controlled according to a control input by a control system, e.g., control system 100 of Fig. 1. The controlling according to the control input may result in a noisy measurement 224 of a constraint quantity. The noise may generally arise from the computer-controlled system 200, the environment 082 that the system 200 interacts with, and/or the measurement of the constraint quantity. Apart from the noise, the constraint quantity may depend deterministically on the control input, e.g., the noisy measurement may be represented as an output of a function applied to the control input, to which a noise is added that is independent from the control input.

The system 200 may comprise a data interface 220. The data interface may be for accessing model data representing a control model trained as described herein, e.g., by system 100 of Fig. 1. The data interface may instead or in addition be for storing control inputs, noisy measurements of the constraint quantity, or other data related to the controlling of system 200. For example, as also illustrated in Fig. 2, the data interface may be constituted by a data storage interface 220 which may access the data 040 from a data storage 022. In general, the data interface 220 and the data storage 022 may be of a same type as described with reference to Fig. 1 for data interface 120 and the data storage 021.

The system 200 may comprise a sensor interface 260 for accessing sensor data 224 indicative of a measurement of the constraint quantity, acquired by a sensor 072 in the environment 082. The sensor may be arranged in environment 082 but may also be arranged remotely from the environment 082, for example if the quantity(s) can be measured remotely. The sensor 072 may but does not need to be part of the system 200. The sensor 072 may have any suitable form, such as an image sensor, a lidar sensor, a radar sensor, a pressure sensor, a contain temperature sensor, etc. In some embodiments, the sensor data 072 may sensor measurements of different physical quantities in that it may be obtained from two or more different sensors sensing different physical quantities. The sensor data interface 260 may have any suitable form corresponding in type to the type of sensor, including but not limited to a low-level communication interface, e.g., based on I2C or SPI data communication, or a data storage interface of a type as described above for the data interface 220.

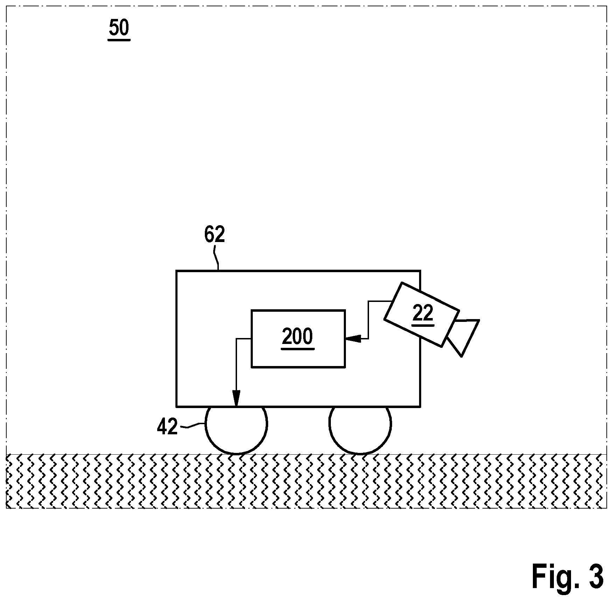

The system 200 may further comprise an actuator interface 280 for providing control data 226 to an actuator (not shown) in the environment 082. The actuator may be part of system 200. For example, the actuator may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Such type of control is described with reference to Fig. 3 for an (semi-)autonomous vehicle.

The system 200 may also comprise a communication interface 290 configured for communication 228 with the control system that controls it, e.g., system 100 of Fig. 1. Communication interface 290 may internally communicate with processor subsystem 240 via data communication 227. Communication interface 290 may be as described for communication interface 190 of Fig. 1. In particular, as illustrated, communication interface 290 may be for communication 228 over a computer network 090; or communication interface 290 can be an internal communication interface.

Processor subsystem 240 may be configured to let the computer-controlled system 200 operate according to the control input of the control system 100 in various ways.

In some embodiments, processor subsystem 240 may be configured to receive the control input from the control system via the communication interface, and may provide control data 226 corresponding to or based on the control input to the actuator(s) via the actuator interface. For example, the control data may comprise values of one or more physical quantities according to which the actuator acts. In other embodiments, processor subsystem 240 may be configured to receive one or more control instructions determined by the control system based on the control input, and provides control data 226 corresponding to or based on the control instructions to the actuator(s). In a further stage following the constrained controlling by the control system, processor subsystem 240 may operate autonomously, e.g., according to trained control model 040 or based on control inputs and noisy measurements, or a safe set, resulting from the constrained controlling.

In some embodiments, processor subsystem 240 may be configured to obtain, via the sensor interface 260, measurements 224 of the constraint quantity resulting from the controlling of the computer-controlled system, and to provide the measurements, via the communication interface 290, to the control system. It will be appreciated that the same considerations and implementation options apply for the processor subsystem 240 as for the processor subsystem 140 of Fig. 1. It will be further appreciated that the same considerations and implementation options may in general apply to the system 200 as for the system 100 of Fig. 1, unless otherwise noted.

In general, each system described in this specification, including but not limited to the system 100 of Fig. 1 and the system 200 of Fig. 2, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 200 may be part of vehicle, robot or other physical entity. System 100 and system 200 may be combined into a single system, e.g., a single device.

Fig. 3 shows an example of the above, in that a (semi-)autonomous vehicle is being shown that is being controlled by a computer. The (semi-)autonomous vehicle 62 may operate in an environment 50. The autonomous vehicle 62 may be autonomous in that it may comprise an autonomous driving system or a driving assistant system, with the latter also being referred to as a semiautonomous system.

In this example, as illustrated, system 200 of Fig. 2 may be incorporated in the autonomous vehicle. System 100 may be incorporated in the vehicle as well, or can be used to control the vehicle remotely. For example, systems 100 and 200 may be used to train the vehicle to operate autonomously in the environment 50, e.g., to control the steering and braking of the autonomous vehicle in order to reach a target destination, based on sensor data obtained from a video camera 22 integrated into the vehicle 62.

For example, the controlling of the vehicle may be performed in a constrained way in that the controlling may be constrained such that the vehicle maintains a minimal distance to one or more objects in the environment 50, and/or that the vehicle adheres to a maximum speed, and/or that the vehicle attains a minimal performance level, e.g., a maximum time to reach a destination. Such constraints may be represented by a constraint quantity being required to exceed a constraint threshold. By controlling the vehicle in a constrained way based on the constraint quantity as described herein, it may be determined which control inputs are safe for controlling the vehicle, and optionally, a control model may be trained or fine-tuned in a safe way, e.g., by avoiding collisions, keeping to the maximum speed, or attaining a minimal performance level for online optimization.

In an other embodiments, the autonomous vehicle 62 can be an agent in a reinforcement learning setting, wherein the present invention is utilized to train a policy by reinforcement learning for controlling the agent. In an other embodiments, the autonomous vehicle 62 is a robot.

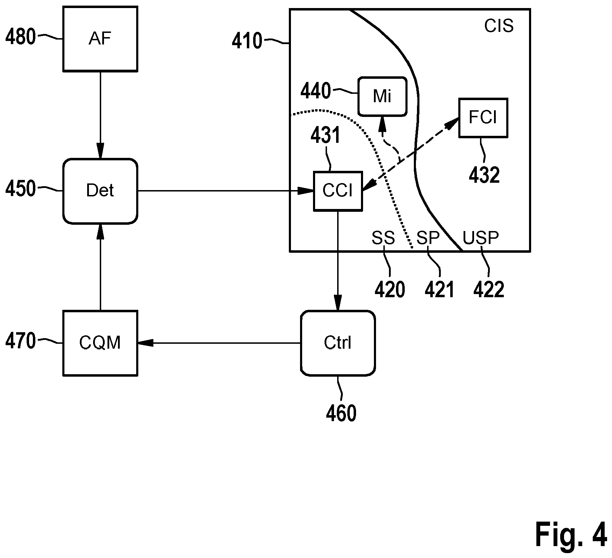

Fig. 4 shows a detailed, yet non-limiting, example of how to control a computer-controlled system in a constrained way.

Shown in the figure is a space **CIS,** 410, of control inputs for controlling a computer-controlled system. The computer-controlled system may be controlled according to a current control input **CCI,** 431. The set of current control inputs may be denoted herein as $X$. The set $X$ may be a set of continuous-valued control parameters, e.g., $\mathbb{R}^n$ for a dimension $n$ (e.g., $n$ may be at most or at least three, at most or at least five, or at most or at least ten); or a continuous subset of such $\mathbb{R}^n$.

The provided techniques may be for constrained controlling of the computer-controlled system, in particular, for online safe optimization of a machine or controller. Constrained controlling may refer to the controlling **Ctrl,** 460, of the computer-controlled system according to the current control input **CCI** resulting in a value of a certain constraint quantity. The constraint quantity can for example represent a safety constraint, and is generally unknown, e.g., in functional form, to the control system, and expensive to evaluate. The controlling according to the current control input **CCI** may be considered safe if the resulting constraint quantity exceeds a certain constraint threshold. The control system may not know the constraint quantity as a function, but may, as a result of the controlling **Ctrl,** obtain a current noisy measurement **CQM,** 470, of the constraint quantity. The constraint quantity may be user-defined or determined based on simulations, for example.

Mathematically, the constraint quantity may be modelled by a function $f : \mathcal{X} \to \mathbb{R}$ with parameters **x** representing the current control input. Parameters **x** with $f(\mathbf{x}) \geq 0$ may be classified as safe, while others are unsafe. Other constraint thresholds than zero can be supported by applying a suitable translation to the function. To start exploring safely, at least one initial safe parameter $x_0$ may be used that satisfies the safety constraint, $f(\mathbf{x}_0) \geq 0$. This is illustrated by the curved line in the figure dividing the safe parameters **SP**, 421 left of the curved line, from the unsafe parameters **USP**, 422, right of the curved line. The constrained controlling may comprise sequentially selecting parameters $\mathbf{x}_n \in X$ where to

evaluate $f$ in order to learn about the safety of parameters beyond $x_0$ and simultaneously learn the safe optimum. At respective iterations $n$, respective noisy observations **CQM** of the constraint quantity may be obtained, which may be modelled as function outputs $y_n := f(\mathbf{x}_n) + v_n$ corrupted by additive homoscedastic Gaussian noise $v_n \sim \mathcal{N}(0, \sigma_v^2)$.

As the function describing the constraint quantity $f$ may be unknown, and the measurements $y_n$ may be noisy, it may generally not be feasible to select parameters **CCI** that are safe with absolute certainty. Instead, high-probability safety guarantees may be provided. Namely, the current control input **CCI** may be determined in such a way that the current control input lies in a safe set **SS,** 420, of control inputs determined likely to be safe. As illustrated in the figure, in which the safe set is to the left of the dotted curve, the safe set **SS** may be a subset of the safe parameters **SP**. However, since the control inputs of the safe set are only likely to be safe, it is in principle possible for the safe set to contain unsafe points. Generally, the threshold at which a control input is determined sufficiently likely to be safe is dependent on the application domain. Setting a conservative (e.g., high) threshold may reduce the risk of using unsafe control inputs to control the system, but may also result in less optimal, e.g., slower, exploration.

The safe set **SS** may be defined based on previous control inputs and corresponding previous noisy measurements. For example, at least 5 or at least 10 previous control inputs and corresponding noisy measurements may be used. In particular, the safe set **SS** may be defined based on a Gaussian Process model of the measurement of the constraint quantity **CQM** given the control input. In particular, the safety constraint may be modelled as a function $f$ which has bounded norm in a Reproducing Kernel Hilbert Space (RKHS) $\mathcal{H}_k$ associated to a kernel $k : \mathcal{X} \times \mathcal{X} \to \mathbb{R}$ with $k(\mathbf{x}, \mathbf{x}') \leq 1$.

Based on the Gaussian Process model, safe set **SS** may be defined as follows. Given a maximum error probability $\delta > 0$, a sequence of positive numbers $\beta_n$ may be determined such that $f(\mathbf{x}) \in [\mu_n(\mathbf{x}) \pm \beta_n \sigma_n(\mathbf{x})]$ with probability at least $1 - \delta$, jointly for all $\mathbf{x} \in X$ and $n \geq 1$, e.g., see S. R. Chowdhury et al., "On kernelized multi-armed bandits", proceedings ICML 2017. Based on these confidence intervals, safe set **SS** may be defined:

$$S_n := \{\mathbf{x} \in \mathcal{X} : \mu_n(\mathbf{x}) - \beta_n \sigma_n(\mathbf{x}) \geq 0\} \cup \{\mathbf{x}_0\}.$$

This safe set **SS** may contain parameters whose $\beta_n$-lower confidence bound is above the safety threshold, as well as the initial safe parameter $\mathbf{x}_0$. Consequently, all parameters in $S_n$ may be safe, $f(\mathbf{x}) \geq 0$ for all $\mathbf{x} \in S_n$, with probability at least $1 - \delta$ jointly over all iterations $n$. In practice, it is possible for example to keep a single fixed $\beta$. The value of $\delta$ may be selected suitably for the application at hand, e.g., depending on the cost of using the computer-controlled system and the impact of using an unsafe control input.

Given the safe set $S_n$, operation **Det** may determine parameters in $S_n$ to evaluate in order to efficiently expand it. Prior art methods may rely on uncertainty sampling over subsets of $S_n$. SafeOpt-based approaches may for example use an explicit Lipschitz assumption on $f$, and a corresponding Lipschitz constant, to identify parameters in $S_n$ that may expand the safe set, and select the parameter that has the biggest uncertainty among those. Interestingly, various techniques proposed herein instead use an information gain measure to identify parameters that allow to efficiently learn about the safety of parameters outside of the safe set $S_n$.

In particular, determination operation **Det** may guide the safe exploration by using an information-theoretic criterion. This allows to directly exploit the properties of GPs to learn about the safety of parameters outside of $S_n$. In particular, the current control input **CCI** may be determined to be maximally informative about the safety of other parameters, in particular of those where it is currently uncertain whether they are safe or not. To this end, the current control input **CCI** may be determined as discussed above for the combined acquisition function, in particular based on a mutual information **MI,** 440, between two random variables (also known as stochastic variables). The first random variable may represent the constraint quantity resulting from the current control input **CCI**. This may be a random variable with a numeric outcome. Of this random variable, a noisy measurement **CQM** may be obtained by the controlling **Ctrl**. The second random variable may indicate whether a further control input **FCI**, 432 is safe. This may be a random variable with a binary outcome: safe or not safe.

The further control input **FCI** is illustrated in the figure as belonging to the unsafe parameters **USP**. The further control input **FCI** may not be constrained to be inside the safe set **SS**, but typically, it is not constrained to lie outside of the safe set either. Accordingly, one or more further control inputs **FCI** selected during the controlling can be safe parameters **SP**, or in principle even elements of the safe set **SS** known to be likely safe, or the current control input **CCI** itself.

The mutual information **MI** may effectively represent an information gain of controlling the computer-controlled system according to the current control input **CCI**.

Based on the mutual information **MI** between a current control input **CCI** and the safety of a further control input **FCI,** the exploration strategy may determine **Det** the current control input **CCI** by maximize the combined acquisition function, e.g. according to the pseudo algorithm above:

$$\mathbf{x}_{n+1} \in arg\ max_{\mathbf{x}\in S_n}\ max\{\alpha^{ISE}(x), \alpha^{MES}(x)\},$$

where the further control input and the safety of a further control input may be determined by optimizing over **x** in the safe set $S_n$.

As illustrated in the above algorithm, the controlling may be performed over multiple iterations, for example, at least 10, at least 20, or at least 50 iterations. For example, the controlling may be performed until a stopping criterion has been reached, e.g., based on a predefined maximal number of iterations, and/or according to a convergence criterion.

In particular, the constrained controlling described herein may be combined with the training of a control model for controlling the computer-controlled system. Such training may be performed by Bayesian optimization, and reinforcement learning in particular. For example the control model may be trained based on a model of the computer-controlled system as a Markov Decision process, as is known per se.

Generally, such training of a control model can be performed simultaneously with, and/or subsequent to the constrained controlling described herein. In particular, the current control input **CCI** may be determined both based on the mutual information **MI,** and based on the Bayesian optimization (BO). By combining the mutual information-based acquisition function described herein with a BO acquisition function, it is possible to expand the safe set **SS** and look for the optimum within the safe set at the same time. In particular, the current control input may be determined based further on an upper confidence bound acquisition function as is known for BO per se. Instead or in addition, the constrained optimization described herein may be used to determine a safe set **SS** as defined by the obtained control inputs and corresponding noisy measurements, the safe set being used in a subsequent Bayesian optimization to find an optimum within the discovered safe set.

Generally, the control model being trained, can be any suitable control model parameterized by a set of parameters. For example, the model may be a neural network. Neural networks are also known as artificial neural networks. Examples include deep neural networks and convolutional neural networks. In this case, the set of parameters may comprise weights of nodes of the neural network. For example, the number of layers of the model may be at least 5 or at least 10, and the number of nodes and/or weights may be at least 1000 or at least 10000. Depending on the particular application, various known architectures for neural networks and other machine learnable models may be used. In addition to the trainable parameters of the model per se, the model may be defined by one or more hyperparameters, which may be optimized by the Bayesian optimization.

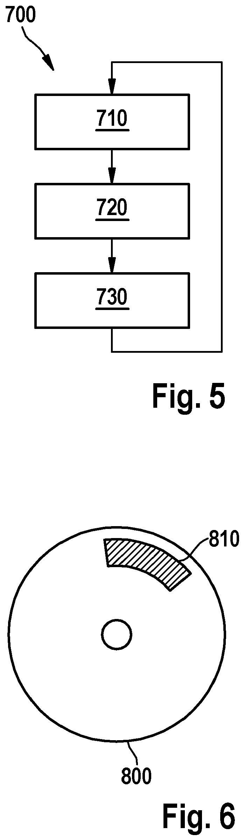

Fig. 5 shows a block-diagram of computer-implemented method 700 of constrained controlling of a computer-controlled system. The computer-controlled system may be controlled according to a control input. The control input may be considered safe if a constraint quantity resulting from the controlling of the computer-controlled system exceeds a constraint threshold. The method 700 may correspond to an operation of the control system 100 of Fig. 1. However, this is not a limitation, in that the method 700 may also be performed using another system, apparatus or device.

The method 700 may be performed in one or more iterations.

In an iteration, the method 700 may comprise, in an operation titled "ACCESS PREVIOUS DATA", accessing 710 data representing previous control inputs and corresponding previous noisy measurements of the resulting constraint quantity. In an iteration, the method 700 may comprise, in an operation titled "DETERMINE CONTROL INPUT BASED ON MUTUAL INFORMATION", determining 720 a current control input based on the previous control inputs and the corresponding previous noisy measurements. The current control input may be determined based on a mutual information between a first random variable representing the constraint quantity resulting from the current control input and a second random variable indicating whether a further control input is safe. In an iteration, the method 700 may comprise, in an operation titled "CONTROL", controlling 730 the computer-controlled system according to the current control input, thereby obtaining a current noisy measurement of the resulting constraint quantity.

It will be appreciated that, in general, the operations of method 700 of Fig. 5 may be performed in any suitable order, e.g., consecutively, simultaneously, or a combination thereof, subject to, where applicable, a particular order being necessitated, e.g., by input/output relations. The controlling may comprise providing control signals to an external computer-controlled system, or operating the computer-controlled system as part of the method.

The method(s) may be implemented on a computer as a computer implemented method, as dedicated hardware, or as a combination of both. As also illustrated in Fig. 6, instructions for the computer, e.g., executable code, may be stored on a computer readable medium 800, e.g., in the form of a series 810 of machine-readable physical marks and/or as a series of elements having different electrical, e.g., magnetic, or optical properties or values. The medium 800 may be transitory or non-transitory. Examples of computer readable mediums include memory devices, optical storage devices, integrated circuits, servers, online software, etc. Fig. 6 shows an optical disc 800. Alternatively, the computer readable medium 800 may comprise data 810 representing a set of previous control inputs and corresponding previous noisy measurements determined as described herein; representing a safe set determined likely to be safe based on the set of previous control inputs and corresponding noisy measurements; and/or representing a control model for controlling a computer-controlled system trained as described herein.

**Claims**

1. A computer-implemented control method (700) of constrained controlling of a computer-controlled system, wherein the computer-controlled system is controlled according to a control input, and wherein the control input is safe if a constraint quantity resulting from the controlling of the computer-controlled system exceeds a constraint threshold, the method comprising iteratively:

   - accessing (710) data representing previous control inputs and corresponding previous noisy measurements of the resulting constraint quantity;
   - determining (720) a current control input based on the previous control inputs and the corresponding previous noisy measurements; and
   - controlling (730) the computer-controlled system according to the current control input, thereby obtaining a current noisy measurement of the resulting constraint quantity,

   **characterized in that** the current control input is determined based on both a mutual information between a first random variable representing the constraint quantity resulting from the current control input and a second random variable indicating whether a further control input is safe and based on a Max-value entropy search (MES) acquisition function for the current control input.

2. The method (700) of claim 1, **characterized in that** the mutual information between the first and second random variable is defined according to a Gaussian Process model of the constraint quantity given the control input.

3. The method (700) of claim 2, **characterized in that** the current control input and the further control input are determined to maximize the maximum of either the mutual information between the first and second random variable or the Max-value entropy search (MES) acquisition function.

4. The method (700) of claim 3, **characterized in that** the maximization is carried out by either multi start gradient ascent, or, by discretizing the safe set of control inputs, computing said mutual information and the Max-value entropy search (MES) for each of the discrete points, and returning the argmax of those.

5. The method (700) of claim 1 or 2, **characterized in that** the mutual information and the Max-value entropy search (MES) acquisition function are both normalized or upper bounded.

6. The method (700) of any preceding claim, **characterized in that** the constraint quantity represents a safety constraint.

7. The method (700) of any preceding claim, **characterized in that** the current control input is determined such that the current control input lies in a safe set of control inputs determined likely to be safe, wherein the safe set is defined based on the previous control inputs and corresponding previous noisy measurements, and wherein the further control input does not lie in the safe set.

8. The method (700) of any preceding claim, **characterized in that** the control input comprises one or more continuous-valued control parameters.

9. The method (700) of any preceding claim, further comprising training a control model for controlling the computer-controlled system by Bayesian optimization, wherein: a) the current control input is determined based on the Bayesian optimization, and/or b) the Bayesian optimization is performed subsequently to the mutual information-based controlling, using the obtained control inputs and corresponding noisy measurements.

10. The method (700) of claim 8 or 9, **characterized in that** the control model is trained based on a model of the computer-controlled system as a Markov Decision process.

11. System configured to carry out any of the methods according to claim 1 to 10.

12. Computer program that is configured to cause a computer to carry out the method according to any one of claims 1 to 10 with all of its steps if the computer program is carried out by a processor.

13. Machine-readable storage medium on which the computer program according to claim 12 is stored.

**Amended claims in accordance with Rule 137(2) EPC.**

1. A computer-implemented control method (700) of constrained controlling of a computer-controlled system, wherein the computer-controlled system is controlled according to a control input, and wherein the control input is safe if a constraint quantity resulting from the controlling of the computer-controlled system exceeds a constraint threshold and is a vector of one or more continuous values, the method comprising iteratively:

   - accessing (710) data representing previous control inputs and corresponding previous noisy measurements of the resulting constraint quantity;
   - determining (720) a current control input based on the previous control inputs and the corresponding previous noisy measurements; and
   - controlling (730) the computer-controlled system according to the current control input, thereby obtaining a current noisy measurement of the resulting constraint quantity,
   **characterized in**

   **that** the current control input is determined based on both a mutual information between a first random variable representing the constraint quantity resulting from the current control input and a second random variable indicating whether a further control input is safe and based on a Max-value entropy search (MES) acquisition function for the current control input and
   **that** the mutual information between the first and second random variable is defined according to a Gaussian Process model of the constraint quantity given the control input and
   **that** the current control input and the further control input are determined to maximize the maximum of either the mutual information between the first and second random variable or the Max-value entropy search (MES) acquisition function and
   **that** the maximization is carried out by either multi start gradient ascent, or, by discretizing the safe set of control inputs, computing said mutual information and the Max-value entropy search (MES) for each of the discrete points, and returning the argmax of those.

2. The method (700) of claim 1, **characterized in that** the mutual information and the Max-value entropy search (MES) acquisition function are both normalized or upper bounded.

3. The method (700) of any preceding claim, **characterized in that** the constraint quantity represents a safety constraint.

4. The method (700) of any preceding claim, **characterized in that** the current control input is determined such that the current control input lies in a safe set of control inputs determined likely to be safe, wherein the safe set is defined based on the previous control inputs and corresponding previous noisy measurements, and wherein the further control input does not lie in the safe set.

5. The method (700) of any preceding claim, **characterized in that** the control input comprises one or more continuous-valued control parameters.

6. System configured to carry out any of the methods according to claim 1 to 5.

7. Computer program that is configured to cause a computer to carry out the method according to any one of claims 1 to 5 with all of its steps if the computer program is carried out by a processor.

8. Machine-readable storage medium on which the computer program according to claim 7 is stored.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

**Application Number**

EP 23 20 0195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/003973 A1 (CHAKRABARTY ANKUSH [US] ET AL) 7 January 2021 (2021-01-07) * abstract * * paragraph [0008] – paragraph [0014] * * paragraph [0036] – paragraph [0043] * * paragraph [0062] – paragraph [0077] * * claims * | 1-13 | INV. G05B13/02 |
| A | Wang Zi ET AL: "Max-value Entropy Search for Efficient Bayesian Optimization", arXiv (Cornell University), 6 March 2017 (2017-03-06), pages 1-9, XP093139584, Ithaca DOI: 10.48550/arxiv.1703.01968 Retrieved from the Internet: URL:https://proceedings.mlr.press/v70/wang17e/wang17e.pdf [retrieved on 2024-03-11] * the whole document * | 1-13 | |
| A | ALONSO MARCO ET AL: "Classified Regression for Bayesian Optimization: Robot Learning with Unknown Penalties", ARXIV.ORG, CORNELL UNIVERSITY LIBRARY, 201 OLIN LIBRARY CORNELL UNIVERSITY ITHACA, NY 14853, 9 November 2020 (2020-11-09), XP081807961, * the whole document * | 1-13 | **TECHNICAL FIELDS SEARCHED (IPC)** G05B |
| A | ALESSANDRO G BOTTERO ET AL: "Information-Theoretic Safe Exploration with Gaussian Processes", ARXIV.ORG, CORNELL UNIVERSITY LIBRARY, 201 OLIN LIBRARY CORNELL UNIVERSITY ITHACA, NY 14853, 9 December 2022 (2022-12-09), XP091390520, * the whole document * | 1-13 | |

The present search report has been drawn up for all claims

| Place of search | Date of completion of the search | Examiner |
|---|---|---|
| The Hague | 12 March 2024 | Abbing, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 0195**

This annex lists the patent family members relating to the patent documents cited in  the above-mentioned European search report.
The members are as contained in the European Patent Office EDP file on
The European Patent Office is in no way liable for these particulars which are merely given for the purpose of information.

**12-03-2024**

| Patent document cited in search report | Publication date | Patent family member(s) | Publication date |
|---|---|---|---|
| US 2021003973 A1 | 07-01-2021 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22184158

**Non-patent literature cited in the description**

- **Y. SUI et al.** Safe exploration for optimization with Gaussian processes. *proceedings ICML*, 2015
- **WANG, Z.** ; **JEGELKA, S.** Max-value Entropy Search for Efficient Bayesian Optimization. *Proceedings of the 34th International Conference on Machine Learning*, 2017, https://proceedings.mlr.press/-v70/wang17e.html
- **M. TURCHETTA et al.** Safe exploration for interactive machine learning. *proceedings NeurIPS*, 2019
- **S. R. CHOWDHURY et al.** On kernelized multi-armed bandits. *proceedings ICML*, 2017